# FASCICULE DE BREVET EUROPEEN

(11) **EP 2 802 506 B1**
(45) Date de publication et mention de la délivrance du brevet: **06.04.2016**
(21) Numéro de dépôt: 13700221.8
(22) Date de dépôt: 11.01.2013
(51) Int. Cl.: B62D 65/06

(54) **BATI DE MONTAGE DE PORTIERE DE VEHICULE**
HALTERAHMEN FÜR EINE FAHRZEUGTÜR
MOUNTING FRAME FOR A VEHICLE DOOR

(30) Priorité: 11.01.2012 FR 1250282
(43) Date de publication de la demande: 19.11.2014
(73) Titulaire: COUTIER INDUSTRIE, 57970 Basse Ham (FR)
(72) Inventeur: COUTIER, Charles, F-57570 Cattenom (FR)
(74) Mandataire: Lavialle, Bruno François Stéphane
(86) Numéro de dépôt international: PCT/EP2013/050512
(87) Numéro de publication internationale: WO 2013/104772

(56) Documents cités:
- FR-A1- 2 937 611

## Description

La présente invention concerne un bâti destiné à associer provisoirement une porte de véhicule à la caisse de celui-ci notamment sur une ligne d'assemblage et de traitement de caisses de véhicules. La porte est au final une porte coulissante. Le dispositif est également appelé écarteur.

Afin de pouvoir correctement traiter par exemple dans un bain de cataphorèse, de revêtir par peinture une caisse de véhicule et ses portes et d'équiper le vantail et la caisse de divers accessoires et mastics, il convient de les associer au moyen d'un dispositif de liaison qui permet un mouvement de la porte sensiblement parallèlement à elle-même (et à l'ouverture de la caisse qui doit l'accueillir) et, également, un mouvement de pivotement de la porte autour d'un axe d'articulation sensiblement vertical, pour pouvoir accéder soit à l'intérieur de la caisse par l'ouverture de la porte, soit à la face interne de cette porte.

La position relative de la caisse et de la porte doit être correctement assurée, au moins lorsque la porte est située à proximité de l'ouverture à obturer. La précision de cette position est requise notamment pour des questions de distance à conserver entre la surface à peindre et le pistolet de peinture et également pour maîtriser les effets "d'ombre" induits par le décalage des surfaces peintes en même temps au regard de la direction de projection de la peinture.

### ARRIERE PLAN DE L'INVENTION

Les dispositifs ou bâtis actuels sont formés par deux cadres articulés l'un à l'autre au moyen de deux bielles ou leviers intermédiaires qui forment avec les deux cadres, en vue de dessus, un quadrilatère articulé.

L'un des cadres possède des moyens pour sa fixation à la caisse du véhicule au niveau de l'ouverture de portière. L'autre cadre possède des moyens pour supporter la porte elle-même. Dans certaines applications ces moyens de support comportent un troisième cadre articulé au second qui lui supporte la porte.

Ces structures de bâti de montage sont réalisées le plus souvent par des membrures mécano-soudées dont les tolérances d'exécution sont larges pour maîtriser les prix de revient. En particulier les pivots d'articulation des cadres entre eux sont du genre charnière de porte avec des gonds coopérant avec l'oeil d'une paumelle ou d'une penture. La précision des assemblages par soudure de ces gonds et paumelles requiert de ménager un jeu important entre le charnon et l'oeil, jeu qui nuit à la précision de la position relative des cadres et donc de celle du panneau de porte et de la caisse. Or celle-ci doit être grande au moins dans le cas où les cadres sont rabattus les uns sur les autres et la porte voisine de son ouverture. En outre ce jeu important forme un interstice qui se remplit du produit du traitement de la caisse (peinture, décapant...) qui conduit rapidement à un blocage des pivots qu'il faut prévenir par un nettoyage fréquent demandant d'intervenir lourdement sur le matériel.

Pour remédier à ces inconvénients, on a proposé - voir FR 2 854 862 - un bâti de montage pour porte de véhicule comprenant un premier cadre avec des moyens pour sa fixation réglable sur une caisse de véhicule au voisinage de l'ouverture de porte, un second cadre avec des moyens pour le support sur ce second cadre de la porte du véhicule, des bras de liaison du premier au second cadre articulés sur le premier et sur le second cadre pour former avec ces derniers un quadrilatère déformable dans lequel les articulations entre les bras et les cadres sont des articulations sphériques.

Cette disposition est tout à fait satisfaisante en production d'autant qu'elle fait l'objet d'un perfectionnement décrit dans FR 2 937 611 qui permet de calibrer correctement chaque bâti en quelques minutes, c'est-à-dire d'obtenir rapidement la position des diverses articulations sphériques pour que le panneau de porte soit correctement placé par rapport à la caisse principalement dans le cas où le panneau est rabattu au voisinage de la porte.

Il est apparu que la manoeuvre du cadre portant la porte par rapport à son support fixé au véhicule n'est pas aisée à réaliser par un opérateur, notamment parce que la porte peinte ne peut pas être touchée ou parce que l'opérateur est dans une position malcommode par rapport à la caisse ou parce que la caisse est immergée dans un bain de cataphorèse, ....

### OBJET DE L'INVENTION

L'invention propose de rendre l'utilisation de cet appareil plus simple et plus ergonomique pour l'opérateur situé sur la chaîne de fabrication du véhicule.

### BREVE DESCRIPTION DE L'INVENTION

A cet effet l'invention a donc pour objet un bâti de montage pour porte de véhicule comprenant:
- un premier support avec des moyens pour sa fixation réglable sur une caisse de véhicule au voisinage de l'ouverture de porte,
- un second support avec des moyens de fixation de la porte du véhicule,
- des bras de liaison des premier et second supports articulés sur chacun d'eux dont la trace forme, dans un plan perpendiculaire au plan de l'ouverture de porte avec la trace, dans le même plan, de ces supports un quadrilatère déformable.

Le bâti comporte :
- un arbre pesant, mobile au moins en translation le long d'un axe vertical dans un guidage porté par le support fixe, entre une première position inférieure et au moins une deuxième position plus élevée que cette position inférieure,
- au moins un organe de manoeuvre d'un organe d'indexation de la position du second support (7) par rapport au premier (1), l'organe de manoeuvre étant relié à l'arbre pesant, et
- un levier de soulèvement, à l'encontre de l'effet de la gravité, de l'arbre pesant depuis la première position vers la deuxième position.

Le système selon l'invention permet une manoeuvre de la porte et une indexation de sa position simple et ergonomique. En effet, la seule action de l'opérateur consiste à actionner un levier unique pour désindexer la porte et même éventuellement pour en assurer le déplacement au moins partiel.

En effet, les moyens de guidage peuvent comporter une rampe conduisant à la transformation d'un mouvement vers le haut en une rotation de l'arbre autour de son axe vertical. La rotation de cet arbre provoque à l'appui d'une came sur, par exemple, l'un des bras de liaison (jouant un rôle de levier de manoeuvre situé dans l'espace balayé par la came susdite) des deux supports et son entraînement pour obtenir un début d'écartement des deux supports et un éloignement de la porte par rapport à la caisse et l'ouverture de porte.

Le fait que l'arbre pesant soit unique, rassemblant ainsi tous les moyens nécessaires au fonctionnement du bâti de montage (son déploiement, son reploiement et ses indexations intermédiaires et de fin de course) et que son mouvement soit vertical permet de le pourvoir à l'une ou l'autre de ses extrémités d'un flotteur tendant à agir en lestage ou en allégement de l'arbre pesant lorsque par exemple la caisse du véhicule est immergée dans un bain de cataphorèse, de manière automatique alors qu'aucun opérateur ne peut actionner le levier de manoeuvre et ce, en fonction de l'effet souhaité dans le fonctionnement de l'appareil.

Le levier de manoeuvre est solidaire d'un organe d'indexation de la position du second support par rapport au premier support.

Par exemple, l'un des organes possibles d'indexation est un crochet qui maintient le second support à proximité du premier de sorte que le panneau de porte est situé dans l'ouverture de la caisse. Un autre de ces organes est un second crochet qui maintient le second support dans une position correspondant à un écartement maximal du panneau de porte par rapport à la caisse. Encore un autre de ces organes est constitué par l'une des membrures du second cadre sur laquelle vient s'appuyer et glisser une came de l'arbre pesant lors de la rotation de ce dernier pour amorcer un écartement du panneau de porte par rapport à la caisse et maintenir, comme indiqué ci-dessus, cet écartement en s'opposant au rappel du second cadre sur le premier cadre.

Le rappel du second cadre sur le premier cadre peut être réalisé par un organe élastique disposé entre les deux supports. De manière avantageuse, l'invention prévoit que les articulations des bras de liaison sur les cadres soient réalisées par des rotules ce qui permet de placer les points d'articulation dans l'espace de manière que l'effet de la gravité soit générateur de l'effort de rappel, sur au moins une plage du débattement total du second cadre par rapport au premier.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés parmi lesquels:
- la figure 1 illustre par un schéma un bâti de montage selon un premier mode de réalisation de l'invention,
- la figure 2 est un schéma d'un détail de la figure 1 vu suivant la flèche F1,

- la figure 3 est le schéma d'un autre détail de la figure 1 vu suivant la flèche F2,
- les figures 4 à 6 sont des vues en perspective d'un bâti de montage selon un deuxième mode de réalisation de l'invention, respectivement en position fermée, semi-ouverte et ouverte,
- la figure 7 est une vue de dessus de ce bâti de montage,
- les figures 8 et 9 sont des vues en perspective d'un bâti de montage selon un troisième mode de réalisation de l'invention, respectivement en position fermée et semi-ouverte,
- la figure 10 est une vue schématique en élévation des moyens de fixation du bâti de montage dans la caisse,
- la figure 11 est une vue de dessus de ces moyens de fixation.

### DESCRIPTION DETAILLEE DE L'INVENTION

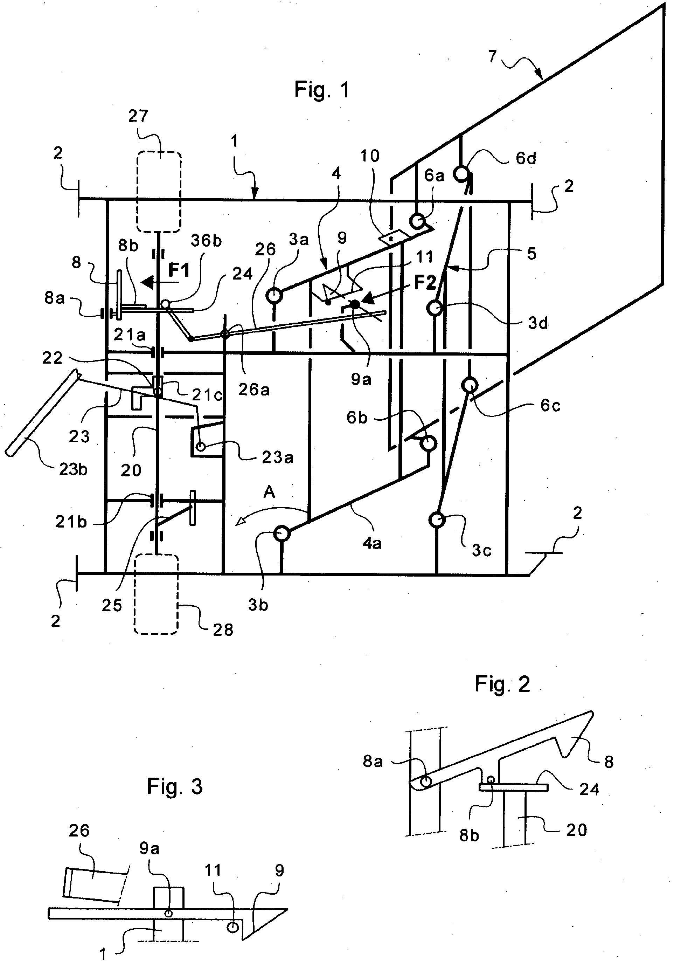

Les figures 1 à 3 illustrant la description ci-dessous du premier mode de réalisation ont été volontairement simplifiés pour les besoins de l'explication. En particulier de nombreux organes de guidage des pièces mobiles et articulées n'ont pas été représentés. En particulier, les moyens de fixation à la caisse ont été représentés de manière totalement schématique.

A la figure 1, le bâti de montage selon l'invention ou écarteur comprend un premier support en forme de cadre 1 destiné à coopérer avec la caisse d'un véhicule. Il est pourvu de moyens 2 pour sa fixation réglable sur cette caisse (non représentée) au voisinage de l'ouverture de porte. Ce cadre 1 porte quatre éléments d'articulation sphérique 3a, 3b, 3c et 3d, définissant deux axes comme dans l'état de la technique. Des bras 4 et 5, ici représentés également comme des cadres, portent également des éléments d'articulation sphérique qui coopèrent avec ceux portés par le cadre 1 pour donc former les articulations 3a, 3b, 3c et 3d. Chacun des bras porte également deux éléments d'articulation sphérique 6a, 6b, 6c et 6d, qui également définissent aussi des axes de rotation pour un support 7 en forme de cadre pour le panneau de porte non représenté. Le cadre 7 possède également des éléments d'articulation sphérique pour coopérer avec ceux des bras et ainsi former les articulations 6a, 6b, 6c et 6d.

Chaque articulation sphérique est connue en elle-même. Elle possède un élément mâle pourvu d'une sphère et rapporté sur un cadre ou un bras. Elle possède également un élément femelle formé d'un embout tubulaire borgne dont la paroi de fond définit une surface interne hémisphérique du boîtier de même diamètre que la sphère également rapporté sur un cadre ou un bras.

Vu de dessus, le bâti de montage - l'écarteur - avec ses supports et ses bras, forme un quadrilatère déformable. L'une des configurations limites de ce quadrilatère est celle correspondant à la figure 1 dans laquelle l'écarteur est dans son état de déploiement maximum. Si, à partir de cet état on replie l'écarteur par exemple en manoeuvrant le bras 4 selon la flèche A, on rabat dans un mouvement de louvoiement le cadre 7 sur le cadre 1, ce qui correspond à la position du panneau de porte logé dans l'ouverture de la caisse.

Un crochet 8 coopère au maintien de l'écarteur dans cet état replié ; un crochet 9 coopère au maintien de l'écarteur dans son état déployé. Ces crochets sont portés par le support fixe 1. Ils y sont articulés comme illustré aux figures 2 et 3, c'est-à-dire autour de pivots 8a et 9a et tendent à tourner vers le bas autour de ces pivots. Des boucles de crochetage 10 et 11 équipent le bras 4 et se trouvent en regard des crochets pour être crochetées par eux dans les états respectifs susdits (à aux figures 1 et 3, le crochet 9 est engagé dans la boucle 11). La prise des crochets et des boucles est automatique. Le dégagement du crochet est quant à lui commandé comme expliqué ci-après.

Le support fixe 1 comporte un arbre 20, porte-came, monté coulissant dans un guidage vertical 21a, 21b et 21c. Les éléments 21a et 21b sont des coulisses tandis que l'élément de guidage 21c est une lumière ménagée dans une plaque du cadre 1 qui impose à l'arbre 20 sa trajectoire et ses limites. Dans le cas de figure, cette lumière a la forme d'une ouverture brisée avec deux tronçons d'extrémité verticaux et un tronçon central de liaison sensiblement horizontal ou légèrement incliné en forme de rampe. On rappelle que cette partie centrale peut ne pas être prévue si une application de l'invention ne requiert pas de mouvement de rotation de l'arbre 20. Un doigt radial 22 solidaire de l'arbre 20 passe dans cette lumière et peut être intercepté par un levier 23 de soulèvement de l'arbre 20 articulé au bâti autour d'une extrémité 23a et possédant une poignée de manoeuvre 23b à son autre extrémité. On comprend que lorsque le levier 23 est en bas et que le doigt 22 est en butée dans la partie inférieure de la lumière 21c, l'arbre est dans sa position inférieure. En relevant le levier 23, on force le doigt 22 à remonter la lumière 21c donc on relève l'arbre 20. Une poursuite du relevage conduit le doigt 22 à parcourir la partie médiane horizontale de la lumière 21c ce qui se traduit par une rotation de l'arbre 20 autour de son axe. La poursuite du relevage entraîne une élévation supplémentaire de l'arbre 20.

Ce dernier est pourvu en partie supérieure d'un plateau 24 qui est une came qui lors de l'ascension de l'arbre 20 rencontre un doigt 8b porté par le crochet 8. Ainsi, lors de la première partie de la montée de l'arbre 20, le crochet 8 est soulevé par le plateau 24 et l'écarteur est déverrouillé s'il était dans son état replié. On peut donc écarter le panneau de porte de la caisse. Pour aider à cette première phase d'écartement, l'arbre 20 possède en partie inférieure une deuxième came 25 qui va tourner avec l'arbre dans la poursuite de l'actionnement du levier 23 par un opérateur. Cette came 25 vient alors prendre un appui glissant sur une membrure inférieure 4a du bras 4 (qui est par hypothèse replié sur le support 1) forçant ainsi une rotation de déploiement de l'écarteur. L'opérateur peut alors plus facilement continuer la manoeuvre de déploiement en agissant directement sur l'appareil déjà entrouvert. On peut ainsi atteindre le déploiement complet de l'écarteur jusqu'à l'engagement du crochet 9 dans la boucle 11 correspondante. On peut également fixer l'écarteur dans une position intermédiaire si d'autres verrous sont prévus à cet effet.

On notera en outre la présence d'un levier 26 articulé en 26a sur le support 1 et dont une extrémité possède un doigt 26b en appui permanent sur le plateau 24 de l'arbre 20. L'autre extrémité de ce levier 26 est susceptible de prendre appui sur la queue du crochet 9 pour le dégager de la boucle 11. Cela se produit quand l'opérateur relève plus encore le levier 23 donc le plateau 24 qui force l'extrémité du levier 26 en direction et au contact de la queue du crochet 9 pour le faire pivoter dans le sens du dégagement de la boucle 11. Il est ainsi possible pour un opérateur qui est éloigné du crochet 9, de le manoeuvrer depuis sa position de travail généralement voisine de la poignée 23b du levier 23.

On a représenté enfin sur la figure 1 des flotteurs 27, 28 qui peuvent être reliés (de manière optionnelle) à l'arbre 20 qui constitue un arbre pesant. La liaison de ces flotteurs à l'arbre 20 sera réalisée de préférence au moyen de leviers, non représentés, qui sont aptes à transformer l'effort résultant de la poussée d'Archimède en effort additionné à l'effet de la gravité sur l'arbre 20 de manière à s'opposer à son relevage qui pourrait être intempestif dans un bain de liquide. On a représenté à la figure 1 deux flotteurs en haut et en bas de l'arbre qui agissent directement sur l'arbre 20 comme agent d'entraînement vers le haut de cet arbre donc, si utile, de déverrouillage au lieu ou en complément du levier de soulèvement. Ce dédoublement permet de répartir et d'ajuster aisément les volumes de flottaison en fonction des résultats souhaités.

On notera enfin une disposition avantageuse de l'invention tenant aux articulations sphériques. Il est en effet possible de prévoir des moyens simples pour ajuster la position dans l'espace, notamment par rapport à l'orientation du champ de la gravité, des points d'articulation et ainsi créer un balourd dans le dispositif chargé d'un panneau de porte qui tend soit à déployer l'écarteur, soit, de manière plus pratique, à le reployer. Ces moyens sont par exemple des platines qui portent de manière réglable en altitude des sphères d'articulation dont la position peut être ajustée dans un plan horizontal sur des semelles prévues sur les éléments appropriés du bâti. On comprend que, par exemple, on puisse obtenir aisément le maintien de la porte dans une position un peu écartée de la caisse position fixée par la came 25 sur laquelle la porte est contrainte de s'appuyer sous l'effet du balourd tendant au reploiement du mécanisme. Il n'y aurait alors pas besoin de crochet intermédiaire pour indexer cette position. L'existence de ce couple de rappel gravitaire présente également l'avantage de garantir que la porte est de manière passive au plus près de la caisse ce qui limite les risque d'arrachement de cette porte dans des cas de dysfonctionnement de la chaîne de traitement.

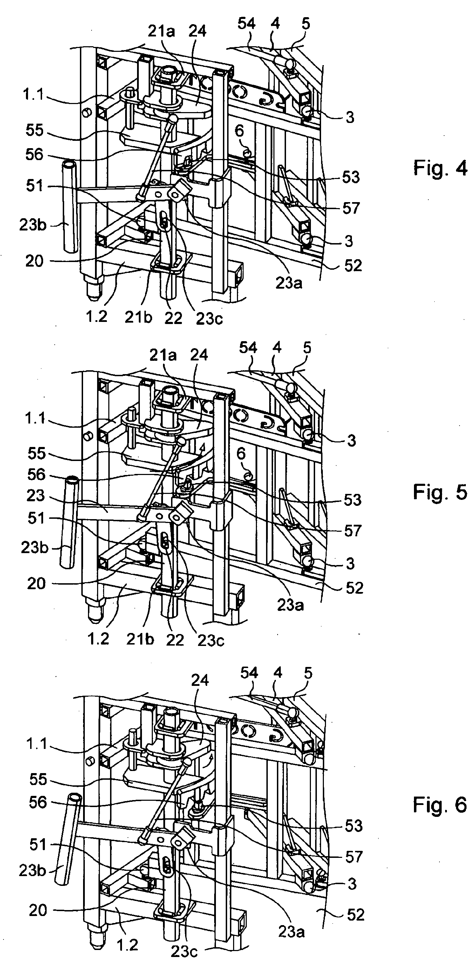

Les éléments identiques ou analogues à ceux précédemment décrits porteront la même référence numérique dans la description qui suit des deuxième et troisième modes de réalisation de l'invention, en référence aux figures 4 à 9.

Dans les deuxième et troisième modes de réalisation, le bâti de montage comprend comme précédemment un support fixe 1, des moyens 2 de fixation du cadre 1 à la caisse, des éléments d'articulation sphérique 3, des bras 4 et 5, des éléments d'articulation sphérique 6, et un cadre 7.

Dans les deuxième et troisième modes de réalisation, le support fixe 1 comporte deux armatures 1.1 et 1.2 sensiblement planes définissant un V en vue de dessus. Sur l'armature 1.1 est monté pour pivoter par des articulations sphériques 51 un bord vertical d'un cadre intermédiaire 52 sur lequel les bras 4 et 5 sont montés pour pivoter par les articulations sphérique 3. Vu de dessus, les cadres 52 et 7 forment avec les bras 4, 5 un quadrilatère déformable. Un doigt de verrouillage 53 s'étendant verticalement est fixé en saillie latérale du cadre intermédiaire 52.

Le bras 4 est en outre relié à l'armature 1.1 par une biellette 54 de telle manière que le pivotement du cadre intermédiaire 52 par rapport à l'armature 1.1 entraîne un pivotement du bras 4 (et donc du bras 5 via le cadre 7) par rapport au cadre intermédiaire 52. Les extrémités de la biellette 54 sont reliées à l'armature 1.1 et au bras 4 par des articulations sphériques. La biellette 54 constitue un moyen de synchronisation du pivotement du bras 4 avec le pivotement du cadre intermédiaire 52 par rapport à la première armature 1.1.

Le support fixe 1 comporte un arbre 20, porte-came pesant, monté coulissant dans un guidage vertical 21a, 21b de l'armature 1.2. L'arbre 20 est pourvu en partie supérieure d'un plateau 55 de commande de verrouillage qui est solidaire en translation de l'arbre 20 et qui est pourvu d'un logement 56 en V pour recevoir le doigt de verrouillage 55 lorsque le cadre intermédiaire 52 est rabattu contre l'armature 1.2.

Un levier 23 a une extrémité 23a articulée à l'armature 1.2 et une extrémité opposée pourvue d'une poignée 23b.

Dans le deuxième mode de réalisation (figures 4 à 7), le levier 23 possède une portion centrale pourvue d'une rainure 23c oblongue sensiblement verticale recevant un doigt radial 22 solidaire de l'arbre 20. La portion centrale du levier 23 est en outre reliée par une biellette 57 à une came 24 qui est montée pour coulisser sur l'arbre 20 et pour pivoter sur l'armature 1.2 de telle manière que la came 24 agisse sur le cadre intermédiaire 52 pour amorcer un mouvement de pivotement du cadre intermédiaire 52 et donc des bras 4, 5, résultant en un début de déploiement du cadre 7. Les extrémités de la biellette 57 sont reliées au levier 23 et à la came 24 par des articulations sphériques. La came 24 est liée en rotation avec le plateau 55 mais est libre en translation par rapport à celui-ci.

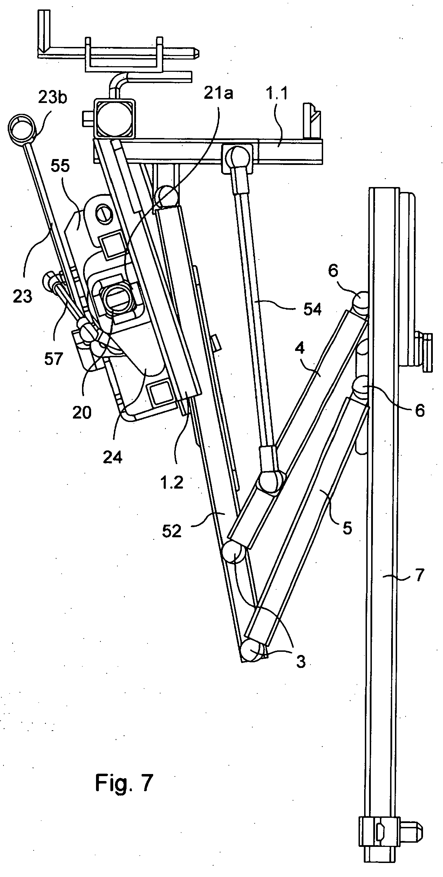

On comprend que lorsque le levier 23 est en bas et que le doigt 22 est en butée dans la partie inférieure de la rainure 23c, l'arbre 20 est dans sa position inférieure (figures 4 et 7). En relevant le levier 23, on force le doigt 22 à remonter de sorte qu'on relève l'arbre 20 et on soulève le plateau 55 dégageant progressivement le doigt de verrouillage 53 du logement 56 (figure 5). Simultanément (ou en variante avec un déphasage), la biellette 57 provoque la rotation de la came 24 et donc du plateau 55. Une poursuite du relevage du levier 23 conduit à mettre en appui la came 24 contre le cadre intermédiaire 52 provoquant le déploiement de l'écarteur (figure 6).

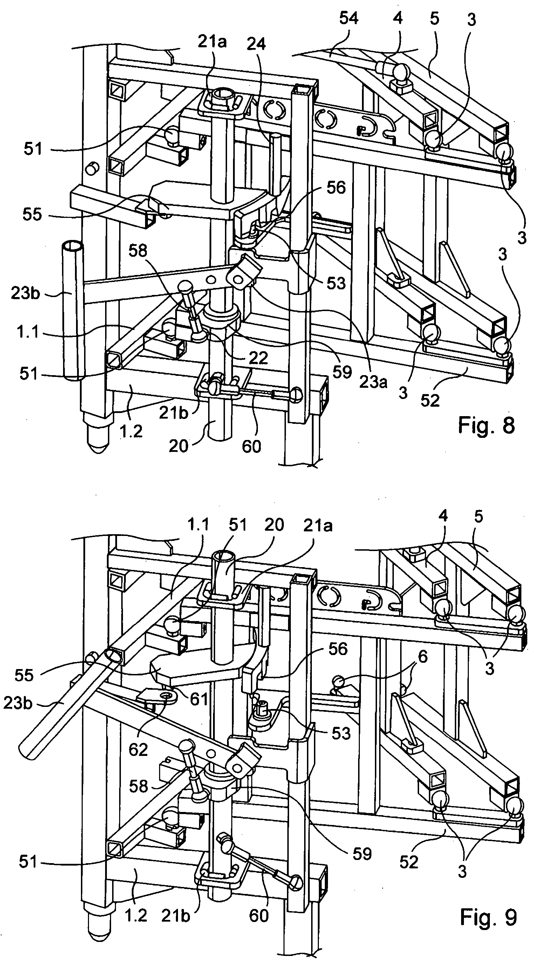

Dans le troisième mode de réalisation (figures 8 et 9), le levier 23 possède une portion centrale reliée par une biellette 58 à un doigt radial 22 solidaire d'une bague 59 solidaire en translation de l'arbre 20 mais libre en rotation par rapport à celui-ci. Les extrémités de la biellette 58 sont reliées au doigt 22 et au levier 23 par des articulations sphériques.

Le levier 23 a une extrémité inférieure reliée à l'armature 1.2 par une biellette 60 ayant des extrémités pourvues d'articulations sphériques. La biellette 60 permet d'entraîner l'arbre 20 en rotation lorsque l'arbre 20 est déplacé verticalement.

Le plateau 55 est solidaire en rotation et en translation de l'arbre 20 et porte en position excentrée une came 24 de telle manière que la came 24 agisse sur le cadre intermédiaire 52 pour amorcer un mouvement de pivotement du cadre intermédiaire 52 et donc des bras 4, 5, résultant en un début de déploiement du cadre 7. Un doigt de verrouillage 61 s'étend en saillie sous le plateau 55 en une position excentrée par rapport à l'arbre 20.

On comprend que lorsque le levier 23 est en bas, l'arbre 20 est dans sa position inférieure (figure 8) et le doigt de verrouillage 61 est reçu dans un logement 62 solidaire du support fixe 1 pour interdire la rotation de l'arbre 20. En relevant le levier 23, on force le doigt 22 à remonter de sorte qu'on relève l'arbre 20 et on soulève le plateau 55 dégageant progressivement le doigt de verrouillage 53 du logement 56 et le doigt de verrouillage 61 du logement 62. Simultanément, la biellette 60 provoque la rotation du plateau 55 et donc le déplacement de la came 24. Une poursuite du relevage du levier 23 conduit à mettre en appui la came 24 contre le cadre intermédiaire 52 provoquant le déploiement de l'écarteur (figure 9).

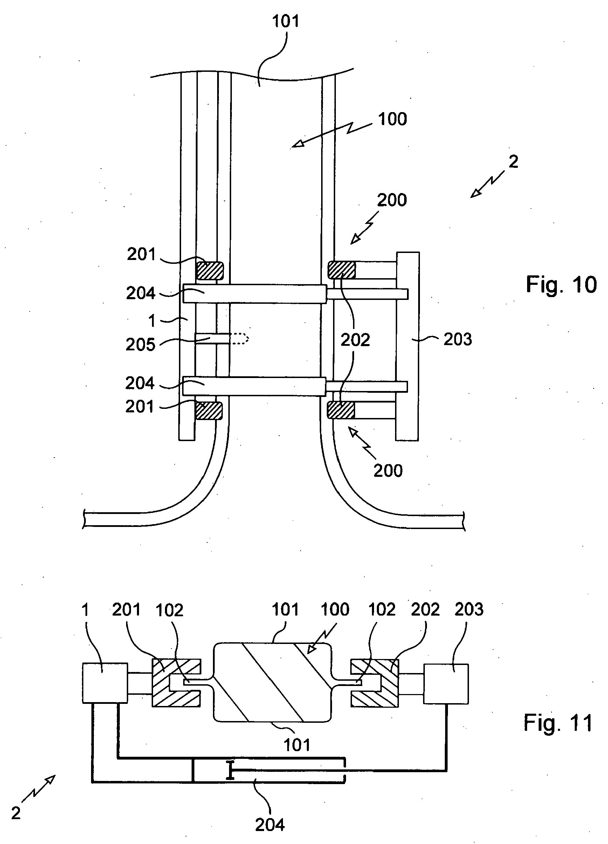

Sur les figures 10 et 11 est représenté un exemple de réalisation des moyens de fixation du bâti de montage sur une caisse de véhicule comportant un montant central, généralement désigné en 100, s'étendant entre les portières avant et arrière. Le montant central 100 est ici formé de deux tôles embouties 101 réunies par sertissage et/ou soudage de leurs bords 102.

Les moyens de fixation, généralement désignés en 2, comprennent deux pinces 200, écartée l'une de l'autre dans la direction verticale, comportant chacun une première mâchoire 201 à laquelle est fixé le support fixe 1 et une deuxième mâchoire 202 qui est fixée sur la première mâchoire 201 par un moyen de réglage d'un écartement des mâchoires, ici un moyen de serrage. Les deux mâchoires 202 sont solidaires d'une même platine 203 reliée par des vérins 204 au support fixe 1 de telle manière à pouvoir serrer entre les mâchoires 201, 202 une portion du montant central 100. En variante, les vérins 204 sont remplacés par un moyen de serrage rapide de type sauterelle ou similaire. En variante, les moyens de serrage maintiennent entre les mâchoires un écartement prédéterminé au moins égal à la largeur du montant 100.

Les mâchoires 201, 202 ont une forme en C définissant un logement pour recevoir un des bords 102.

Le montant 100 peut comprendre un relief avec lequel coopèrent les moyens de fixation pour positionner en hauteur le support 1.

Par exemple en l'absence d'un tel relief, le support fixe 1 est avantageusement pourvu d'un pion 205 destiné à être engagé dans un logement ménagé dans le montant central 100 pour indexer en hauteur les pinces 200 le long du montant 100. Le bâti de montage peut comprendre des moyens d'escamotage permettant de déplacer le pion 205 entre une position escamotée de non utilisation et une position en saillie d'utilisation. Le bâti de montage peut comprendre des moyens de déplacement et/ou des moyens de réglage en hauteur du pion 205.

Bien entendu, l'invention n'est pas limitée aux modes de réalisation décrits mais englobe toute variante entrant dans le champ de la définition de l'invention figurant dans les revendications.

En particulier, l'invention peut prendre une forme plus simple dans laquelle par exemple, il n'existe aucune rotation de l'arbre porte-came.

Les moyens de fixation peuvent avoir une structure différente de celles décrites et/ou représentées.

Bien que le second support ait été représenté sous la forme d'un cadre 7, les supports peuvent être formés par un élément unique ou plusieurs armatures solidaires les unes des autres.

L'un des bras 4 et 5 peut ne comprendre qu'une articulation au support fixe 1 et/ou qu'une articulation au cadre 7. Le bras 4 ou 5 peut ainsi avoir la forme d'une biellette.

Un troisième support, par exemple déployable, peut être fixé sur le second support pour être mobile par rapport à celui-ci.

L'arbre pesant peut être manipulé par un levier fixé à demeure sur le bâti de montage ou un levier amovible et adaptable sur celui-ci. Dans ce dernier cas notamment, le levier amovible peut être introduit dans la caisse pour s'engager sur l'arbre pesant en passant le levier amovible par l'ouverture de vitre ménagée dans la porte, par le trou ménagé dans la porte pour recevoir la serrure ou par tout espace existant entre la porte et la caisse lorsque la porte est supportée par l'écarteur. Le levier amovible est agencé pour agir directement sur l'arbre pesant à la place du levier 23 (ledit levier amovible comporte alors un moyen de son engagement sur l'arbre pesant) ; agir sur un levier intermédiaire, par exemple de type fourchette, distinct du levier 23 ; ou agir directement ou indirectement sur le levier 23 (ledit levier amovible comporte alors par exemple un moyen de son engagement sur le levier 23). Ceci permet d'ouvrir la porte depuis l'extérieur de la caisse sans toucher la porte, ce qui est avantageux notamment lorsque la porte vient d'être peinte.

Le bâti de montage peut également être associé à des moyens de fermeture de la porte depuis l'extérieur de la caisse, par exemple une tige introduite dans le trou de serrure de la porte pour permettre à un opérateur de manipuler la porte sans la toucher directement.

## Revendications

1. Bâti de montage pour porte de véhicule comprenant au moins :
- un premier support (1), dit support fixe, avec des moyens (2) pour sa fixation réglable sur une caisse de véhicule au voisinage de l'ouverture de porte,
- un second support (7) avec des moyens de fixation de la porte du véhicule,
- des bras (4, 5) de liaison des premier et second supports (1, 7) articulés sur chacun d'eux dont la trace forme, dans un plan perpendiculaire au plan de l'ouverture de porte avec la trace, dans le même plan, de ces supports un quadrilatère déformable,
**caractérisé en ce que** le bâti comporte:
- un arbre pesant (20), mobile au moins en translation le long d'un axe vertical dans un guidage (21a, 21b) porté par le support fixe, entre une première position inférieure et au moins une deuxième position plus élevée que cette position inférieure,
- au moins un organe de manoeuvre d'un organe d'indexation de la position du second support (7) par rapport au premier (1), l'organe de manoeuvre étant relié à l'arbre pesant, et
- un levier (23) de soulèvement, à l'encontre de l'effet de la gravité, de l'arbre pesant (20) depuis la première position vers la deuxième position.

2. Bâti selon la revendication 1, dans lequel l'organe de manoeuvre comprend au moins une came radiale (24, 25), reliée à l'arbre pesant, qui balaie un espace autour de l'arbre pesant dans lequel s'étend au moins un levier (8b, 26) de manoeuvre de l'organe d'indexation.

3. Bâti selon la revendication 2, dans lequel le guidage susdit comporte des moyens (21c) forçant la rotation de l'arbre pesant (20), lequel comporte une came (25) apte à prendre appui sur l'un des bras (4) de liaison (jouant un rôle de levier de manoeuvre situé dans l'espace balayé par la came susdite) des deux supports (1,7) pour obtenir un début d'écartement des deux supports et un éloignement de la porte par rapport à la caisse.

4. Bâti selon l'une des revendications précédentes, dans lequel l'arbre pesant (20) est pourvu à l'une ou l'autre de ses extrémités d'un flotteur (27,28) tendant à le déplacer vers le haut lorsque par exemple la caisse du véhicule est immergée dans un bain de traitement.

5. Bâti selon l'une des revendications précédentes, dans lequel chaque levier de manoeuvre est solidaire d'un organe d'indexation (8,9) de la positon du second support (7) par rapport au premier (1).

6. Bâti selon la revendication 5, dans lequel l'un de ces organes est un crochet qui maintient le second support à proximité du premier de sorte que le panneau de porte est situé dans l'ouverture de la caisse.

7. Bâti selon la revendication 5, dans lequel un autre de ces organes est un second crochet qui maintient le second support dans une position correspondant à un écartement maximal du panneau de porte par rapport la caisse.

8. Bâti selon la revendication 5, dans lequel un troisième organe est constitué par l'une des membrures (4a) du bras (4) sur laquelle vient s'appuyer et glisser une came (25) solidaire de l'arbre pesant (20) lors de la rotation de ce dernier pour amorcer un écartement du panneau de porte par rapport à la caisse.

9. Bâti selon l'une des revendications précédentes, dans lequel les articulations (3a, 3b, 3c, 3d, 6a, 6b, 6c, 6d) des bras de liaison (4, 5) sur les supports sont réalisées par des rotules, permettant de placer les points d'articulation dans l'espace de manière que l'effet de la gravité soit générateur d'un effort de rappel, sur au moins une plage du débattement total, du second cadre (7) par rapport au premier (1).

10. Bâti selon la revendication 1, dans lequel le support fixe (1) comporte une première et une deuxième armatures (1.1) et (1.2) sensiblement planes définissant un dièdre, sur la première armature (1.1) étant monté pour pivoter un bord vertical d'un cadre intermédiaire 52 sur lequel les bras (4, 5) sont montés pour pivoter, l'un des bras (4) étant en outre relié à la première armature (1.1) par un moyen de synchronisation du pivotement du bras (4) avec le pivotement du cadre intermédiaire (52) par rapport à la première armature (1.1).

11. Bâti selon la revendication 10, dans lequel l'arbre pesant (20) est pourvu en partie supérieure d'un plateau 55 de commande de verrouillage qui est solidaire en translation de l'arbre (20) et qui est pourvu d'un logement (56) pour recevoir, lorsque le cadre intermédiaire (52) est rabattu contre l'armature (1.2), un doigt de verrouillage (55) solidaire du cadre intermédiaire (52).

12. Bâti selon la revendication 11, dans lequel le levier (23) est relié par une biellette (57) à la came (24) montée pour coulisser sur l'arbre (20) et pivoter sur le support fixe (1) et pour agir sur le cadre intermédiaire (52), la came (24) étant liée en rotation avec le plateau (55) mais est libre en translation par rapport à celui-ci.

13. Bâti selon la revendication 12, dans lequel le levier (23) est relié par une biellette (58) à un doigt radial (22) solidaire d'une bague (59) solidaire en translation de l'arbre pesant (20) mais libre en rotation par rapport à celui-ci et le levier (23) a une extrémité inférieure reliée à l'armature (1.2) par une biellette (60) pour entraîner l'arbre pesant (20) en rotation lorsque l'arbre pesant (20) est déplacé verticalement, le plateau (55) étant solidaire en rotation et en translation de l'arbre pesant (20) et porte en position excentrée la came (24) de telle manière que la came (24) agisse sur le cadre intermédiaire 52.

14. Bâti selon la revendication 13, dans lequel Un doigt de verrouillage (61) s'étend en saillie sous le plateau (55) en une position excentrée par rapport à l'arbre pesant (20) pour être reçu dans un logement (62) du support fixe (1) lorsque le cadre intermédiaire (52) est rabattu contre le support fixe (1).

15. Bâti selon la revendication 1, dans lequel les moyens de fixation (200) comprennent au moins une pince comportant chacun une première mâchoire (201) à laquelle est fixé le support fixe (1) et une deuxième mâchoire (202) qui est fixée sur la première mâchoire (201) de manière à serrer entre elles une portion d'un montant central (100) de la caisse.

16. Bâti selon la revendication 1, dans lequel la deuxième mâchoire (202) a une extrémité articulée à une extrémité de la première mâchoire (201) et une extrémité opposée fixée à une extrémité opposée de la première mâchoire (201) par un moyen de réglage d'un écartement des mâchoires.

17. Bâti selon la revendication 16, dans lequel les mâchoires (201, 202) forment un logement pour recevoir un bord (102) du montant central (100).

18. Bâti selon la revendication 16, dans lequel au moins une des mâchoires (201) est pourvue d'au moins un pion (204) destiné à être engagé dans un logement ménagé dans le montant central (100) pour indexer en hauteur ladite mâchoire (201) le long du montant (100).

19. Bâti selon la revendication 1, dans lequel le levier est amovible et adaptable sur le bâti en étant introduit dans la caisse par une ouverture de vitre ménagée dans la porte, ou par un trou ménagé dans la porte pour recevoir la serrure ou par tout espace existant entre la porte et la caisse lorsque la porte est supportée par l'écarteur.

20. Bâti selon la revendication 1, dans lequel le levier est agencé pour agir soit directement soit indirectement sur l'arbre pesant.

## Patentansprüche

1. Montagegestell für eine Fahrzeugtür, mindestens umfassend:
- einen ersten Träger (1), bezeichnet als fester Träger, mit Mitteln (2) für seine verstellbare Befestigung an einer Fahrzeugkarosserie nahe der Türöffnung,
- einen zweiten Träger (7) mit Befestigungsmitteln zur Befestigung der Tür des Fahrzeugs,
- Arme (4, 5) zur Verbindung des ersten und des zweiten Trägers (1, 7), die an jedem dieser Träger angelenkt sind und deren Spur in einer Ebene senkrecht zur Ebene der Türöffnung mit der Spur dieser Träger in derselben Ebene ein verformbares Viereck bildet,
**dadurch gekennzeichnet, dass** das Gestell umfasst:
- eine Schwereachse (20), die zumindest in Translation entlang einer vertikalen Achse in einer von dem festen Träger getragenen Führung (21a, 21b) zwischen einer ersten unteren Position und mindestens einer zweiten Position, die höher als diese untere Position ist, beweglich ist,
- mindestens ein Betätigungselement zum Betätigen eines Indexierungselements zur Indexierung der Position des zweiten Trägers (7) in Bezug auf den ersten Träger (1), wobei das Betätigungselement mit der Schwereachse verbunden ist, und
- einen Hebel (23) zum Anheben der Schwereachse (20) entgegen der Wirkung der Schwerkraft von der ersten Position in Richtung der zweiten Position.

2. Gestell nach Anspruch 1, wobei das Betätigungselement mindestens einen mit der Schwereachse verbundenen radialen Nocken (24, 25) umfasst, der einen Raum um die Schwereachse herum durchquert, in dem sich mindestens ein Betätigungshebel (8b, 26) zum Betätigen des Indexierungselements erstreckt.

3. Gestell nach Anspruch 2, wobei die oben genannte Führung Mittel (21c) umfasst, die die Drehung der Schwereachse (20) erzwingen, welche einen Nocken (25) umfasst, der dazu geeignet ist, an einem der Verbindungsarme (4) (der eine Aufgabe eines Betätigungshebels erfüllt, der sich in dem von dem oben genannten Nocken durchquerten Raum befindet) zur Verbindung der beiden Träger (1, 7) zur Anlage zu kommen, um einen Beabstandungsbeginn für die beiden Träger und ein Entfernen der Tür in Bezug auf die Karosserie zu erhalten.

4. Gestell nach einem der vorhergehenden Ansprüche, wobei die Schwereachse (20) an dem einen oder dem anderen ihrer Enden mit einem Schwimmer (27, 28) versehen ist, der dazu neigt, sie nach oben zu verschieben, wenn beispielsweise die Karosserie des Fahrzeugs in ein Behandlungsbad eingetaucht wird.

5. Gestell nach einem der vorhergehenden Ansprüche, wobei jeder Betätigungshebel fest mit einem Indexierungselement (8, 9) zur Indexierung der Position des zweiten Trägers (7) in Bezug auf den ersten Träger (1) verbunden ist.

6. Gestell nach Anspruch 5, wobei eines dieser Elemente ein Haken ist, der den zweiten Träger nahe dem ersten Träger hält, derart, dass sich die Türplatte in der Öffnung der Karosserie befindet.

7. Gestell nach Anspruch 5, wobei ein anderes dieser Elemente ein zweiter Haken ist, der den zweiten Träger in einer Position hält, die einem maximalem Abstand der Türplatte in Bezug auf die Karosserie entspricht.

8. Gestell nach Anspruch 5, wobei ein drittes Element von einer der Streben (4a) des Arms (4) gebildet ist, an der ein fest mit der Schwereachse (20) verbundener Nocken (25) während der Drehung dieser Achse zur Anlage kommen und gleiten wird, um ein Beabstanden der Türverkleidung in Bezug auf die Karosserie einzuleiten.

9. Gestell nach einem der vorhergehenden Ansprüche, wobei die Gelenkverbindungen (3a, 3b, 3c, 3d, 6a, 6b, 6c, 6d) zur Verbindung der Verbindungsarme (4, 5) an den Trägern über Kugelgelenke umgesetzt werden, die ein Anordnen der Gelenkverbindungspunkte im Raum derart ermöglichen, dass die Wirkung der Schwerkraft eine Rückstellkraft zum Rückstellen des zweiten Trägers (7) in Bezug auf den ersten Träger (1) über mindestens einen Gesamtschwenkbereich bewirkt.

10. Gestell nach Anspruch 1, wobei der feste Träger (1) eine erste Bewehrung (1.1) und eine zweite Bewehrung (1.2) umfasst, die im Wesentlichen flächig sind und ein Dieder definieren, wobei an der ersten Bewehrung (1.1) ein vertikaler Rand eines Zwischenrahmens (52) drehbar gelagert ist, an dem die Arme (4, 5) drehbar gelagert sind, wobei einer der Arme (4) ferner mit der ersten Bewehrung (1.1) über ein Mittel zur Synchronisierung des Schwenkens des Arms (4) mit dem Schwenken des Zwischenrahmens (52) in Bezug auf die erste Bewehrung (1.1) verbunden ist.

11. Gestell nach Anspruch 10, wobei die Schwereachse (20) im oberen Teil mit einer Platte (55) zur Steuerung einer Verriegelung versehen ist, die translationsfest mit der Achse (20) verbunden und mit einer Aufnahme (56) versehen ist, um einen fest mit dem Zwischenrahmen (52) verbundenen Verriegelungszapfen (55) aufzunehmen, wenn der Zwischenrahmen (52) gegen die Bewehrung (1.2) geklappt ist.

12. Gestell nach Anspruch 11, wobei der Hebel (23) über eine Stange (57) mit dem Nocken (24) verbunden ist, der verschiebbar an der Welle (20) und drehbar an dem festen Träger (1) gelagert und so montiert ist, dass er auf den Zwischenrahmen (52) einwirkt, wobei der Nocken (24) drehbar mit der Platte (55) verbunden, jedoch in Bezug auf dieselbe in Translation frei beweglich ist.

13. Gestell nach Anspruch 12, wobei der Hebel (23) über eine Stange (58) mit einem radialen Zapfen (22) verbunden ist, der fest mit einem Ring (59) verbunden ist, der translationsfest mit der Schwereachse (20) verbunden ist, sich jedoch in Bezug auf dieselbe frei drehen kann, und der Hebel (23) ein unteres Ende hat, das mit der Bewehrung (1.2) über eine Stange (60) verbunden ist, um die Schwereachse (20) drehend anzutreiben, wenn die Schwereachse (20) vertikal verschoben wird, wobei die Platte (55) dreh- und translationsfest mit der Schwereachse (20) verbunden ist und in einer exzentrisch angeordneten Position den Nocken (24) derart trägt, dass der Nocken (24) auf den Zwischenrahmen (52) einwirkt.

14. Gestell nach Anspruch 13, wobei ein Verriegelungszapfen (61) unter der Platte (55) in einer in Bezug auf die Schwereachse (20) exzentrischen Position vorsteht, um in einer Aufnahme (62) des festen Trägers (1) aufgenommen zu werden, wenn der Zwischenrahmen (52) gegen den festen Träger (1) geklappt ist.

15. Gestell nach Anspruch 1, wobei die Befestigungsmittel (200) mindestens eine Zange umfassen, die jeweils eine erste Spannbacke (201) umfasst, an der der feste Träger (1) fixiert ist, sowie eine zweite Spannbacke (202), die an der ersten Spannbacke (201) derart fixiert ist, dass sie zwischen sich einen Abschnitt einer Mittelsäule (100) der Karosserie einspannen.

16. Gestell nach Anspruch 1, wobei die zweite Spannbacke (202) ein Ende hat, das an einem Ende der ersten Spannbacke (201) angelenkt ist, sowie ein entgegengesetztes Ende, das an einem entgegengesetzten Ende der ersten Spannbacke (201) über Mittel zum Einstellen eines Abstandes der Spannbacken fixiert ist.

17. Gestell nach Anspruch 16, wobei die Spannbacken (201, 202) eine Aufnahme bilden, um einen Rand (102) der Mittelsäule (100) aufzunehmen.

18. Gestell nach Anspruch 16, wobei mindestens eine der Spannbacken (201) mit mindestens einem Zapfen (204) versehen ist, der dazu bestimmt ist, in eine Aufnahme eingebracht zu werden, die in der Mittelsäule (100) ausgebildet ist, um die genannte Spannbacke (201) entlang der Säule (100) in Höhenrichtung zu indexieren.

19. Gestell nach Anspruch 1, wobei der Hebel abnehmbar und an dem Gestell vielseitig verwendbar ist, indem er in die Karosserie durch eine in der Tür ausgebildete Fensteröffnung oder durch ein Loch, das in der Tür ausgebildet ist, um das Schloss aufzunehmen, oder durch jeden Raum, der zwischen der Tür und der Karosserie vorhanden ist, wenn die Tür von dem Abstandshalter getragen wird, eingeführt wird.

20. Gestell nach Anspruch 1, wobei der Hebel so ausgebildet ist, dass er entweder direkt oder indirekt auf die Schwereachse einwirkt.

## Claims

1. A mounting jig for a vehicle door, the jig comprising at least:
· a first support (1), known as stationary support, having means (2) for adjustably fastening it to a vehicle body in the vicinity of the door opening;
· a second support (7) having fastening means for fastening the vehicle door;
· connection arms (4, 5) for interconnecting the first and second supports (1, 7), which arms are hinged to each of said supports, and their trace, in a plane perpendicular to the plane of the door opening, cooperates with the trace, in the same plane, of said supports, to form a deformable quadrilateral;
said mounting jig being **characterized in that** the jig further comprises:
· a weight arm (20), mounted to move at least in translation along a vertical axis in guide means (21a, 21b) carried by the stationary support, between a low first position and at least one second position that is higher than said low position;
· at least one operating member for operating an indexing member for indexing the position of the second support (7) relative to the first support (1), the operating member being connected to the weight shaft; and
· a raising lever (23), for acting against the effect of gravity, to raise the weight shaft (20) from the first position towards the second position.

2. A jig according to claim 1, wherein the operating member comprises at least one radial cam (24, 25), connected to the weight shaft, and that sweeps through a space around the weight shaft, in which space at least one operating lever (8b, 26) for operating the indexing member extends.

3. A jig according to claim 2, wherein said guide means include means (21c) forcing the weight shaft (20) to move in rotation, which means include a cam (25) suitable for bearing against one of the connection arms (4) (acting as an operating lever situated in the space swept by said cam) that interconnect the two supports (1, 7) so as to cause the two supports to start being spaced apart and so as to cause the door to move away from the body.

4. A jig according to any preceding claim, wherein the weight shaft (20) is provided with a float (27, 28) at one of its ends, which float tends to move it upwards when, for example, the body of the vehicle is immersed in a treatment bath.

5. A jig according to any preceding claim, wherein each operating lever is secured to or integral with an indexing lever (8, 9) for indexing the position of the second support (7) relative to the first support (1).

6. A jig according to claim 5, wherein one of said members is a hook that maintains the second support in the vicinity of the first support so that the door panel is situated in the opening in the body.

7. A jig according to claim 5, wherein another of said members is a second hook that maintains the second support in a position corresponding to the door panel being spaced apart to a maximum extent from the body.

8. A jig according to claim 5, wherein a third member is constituted by one of the structural members (4a) of the arm (4), on which member a cam (25) that is secured to or integral with the weight shaft (20) comes to bear and slide while said shaft is moving in rotation so as to initiate spacing the door panel apart from the body.

9. A jig according to any preceding claim, wherein the hinges (3a, 3b, 3c, 3d, 6a, 6b, 6c, 6d) whereby the connection arms (4, 5) are hinged to the supports are implemented by ball joints, making it possible to place the hinge points three-dimensionally in such a manner that the effect of gravity generates a return force, over at least some range of the total movement of the second frame (7) relative to the first frame (1).

10. A jig according to claim 1, wherein the stationary support (1) has first and second reinforcements (1.1) and (1.2) that are substantially plane and that define a dihedral, a vertical edge of an intermediate frame (52) on which the arms (4, 5) are mounted to pivot being mounted to pivot on the first reinforcement (1.1), one of the arms (4) also being connected to the first reinforcement (1.1) via means for synchronizing the pivoting of the arm (4) with the pivoting of the intermediate frame (52) relative to the first reinforcement (1.1).

11. A jig according to claim 10, wherein the upper portion of the weight shaft (20) is provided with a locking control tray (55) that is constrained to move in translation with the shaft (20) and that is provided with a V-shaped recess (56) for receiving a locking finger (55) secured to integral with the intermediate frame (52) when said intermediate frame (52) is brought against the reinforcement (1.2).

12. A jig according to claim 11, wherein the lever (23) is connected via a link (57) to the cam (24) mounted to slide on the shaft (20) and to pivot on the stationary support (1) and to act on the intermediate frame (52), the cam (24) being constrained in rotation with the tray (55) but being free to move in translation relative thereto.

13. A jig according to claim 12, wherein the lever (23) is connected by a link (58) to a radial finger (22) that is secured to or integral with a ring (59) that is constrained in translation with the weight shaft (20) but that is free to move in rotation relative thereto, and the lever (23) has a bottom end connected to the reinforcement (1.2) via a link (60) for driving the weight shaft (20) in rotation when the weight shaft (20) is moved vertically, the tray (55) being constrained in rotation and in translation with the weight shaft (20), and carries the cam (24) in an off-center position in such a manner that the cam (24) acts on the intermediate frame (52).

14. A jig according to claim 13, wherein a locking finger (61) extends in a manner such that it projects under the tray (55) in an off-center position relative to the weight shaft (20) so as to be received in a recess (62) in the stationary support (1) when the intermediate frame (52) is brought against the stationary support (1).

15. A jig according to claim 1, wherein the fastening means (200) comprise at least one clamp, each of which comprises a first jaw (201) to which the stationary support (1) is fastened and a second jaw (202) that is fastened to the first jaw (201) in such a manner as to clamp a portion of a central upright (100) of the body between them.

16. A jig according to claim 1, wherein the second jaw (202) has an end hinged to an end of the first jaw (201), and an opposite end fastened to an opposite end of the first jaw (201) by means for adjusting a spacing between the jaws.

17. A jig according to claim 16, wherein the jaws (201, 202) form a recess for receiving an edge (102) of the central upright (100).

18. A jig according to claim 16, wherein at least one of the jaws (201) is provided with at least one stud (204) designed to be engaged in a recess provided in the central upright (100) so as to index said jaw (201) in the height direction along the upright (100).

19. A jig according to claim 1, wherein the lever is removable and suitable for being fitted to the jig by being inserted into the body through a window opening provided in the door, or through a hole provided in the door for receiving the lock, or through any space existing between the door and the body when the door is supported by the spacer.

20. A jig according to claim 1, wherein the lever is arranged to act either directly or indirectly on the weight shaft.
